# EUROPEAN PATENT SPECIFICATION

(11) **EP 2 655 531 B1**
(45) Date of publication and mention of the grant of the patent: **21.06.2017**
(21) Application number: 11851693.9
(22) Date of filing: 16.12.2011
(51) Int. Cl.: C09D 163/00, C09G 1/16, C09D 7/12

(54) **GLOSSY AUTO-DEPOSITION COATING AND METHOD OF COATING**
GLÄNZENDE AUTOMATISCH ABGELAGERTE BESCHICHTUNG UND VERFAHREN ZU IHRER ANBRINGUNG
REVÊTEMENT BRILLANT APPLICABLE PAR AUTO DÉPOSITION ET SON PROCÉDÉ D'APPLICATION

(30) Priority: 20.12.2010 US 201061425229 P
(43) Date of publication of application: 30.10.2013
(73) Proprietor: Henkel AG & Co. KGaA, 40589 Düsseldorf (DE)
(72) Inventor: QIU, Xueting, Shangai 201203 (CN); SEKHARAN, Manesh, Nadupparambil, Midland MI 48642 (US); ABU-SHANAB, Omar, Rochester Hills MI 48306 (US); FRISTAD, William, E., Rochester Hills MI 48306 (US); KUMAR, Girdhari, Sterling Heights MI 48310 (US)
(86) International application number: PCT/US2011/065459
(87) International publication number: WO 2012/087813

(56) References cited:
- WO-A2-2004/007443
- WO-A2-2009/088993
- US-A1- 2003 068 498
- US-A1- 2003 143 405
- US-A1- 2004 043 155
- US-A1- 2008 160 199

## Description

### FIELD OF THE INVENTION

This invention relates to autodeposition compositions and processes for generating an appearance of a polymeric coating on a metal substrate by chemical reaction between the metal and an autodeposition coating bath. More particularly, the invention relates to glossy coatings generated by an autodeposition coating bath having been modified to provide a smooth, high gloss coating surface finish.

### BACKGROUND OF THE INVENTION

Autodeposition has been in commercial use on steel for about thirty years and is now well established for that use. For details, see for example, U.S. Pat. Nos. 3,063,877; 3,585,084; 3,592,699; 3,674,567; 3,791,431; 3,795,546; 4,030,945; 4,108,817; 4,178,400; 4,186,226; 4,242,379; 4,234,704; 4,636,264; 4,636,265; 4,800,106; and 5,342,694. Epoxy resin-based autodeposition coating systems are described in U.S. Pat. No. 4,180,603 (Howell. Jr.); U.S Pat. No. 4,289,826 (Howell Jr.); U.S. Pat. No. 5,500,460 (Ahmed et al.); and International Publication Number WO 00/71337. Epoxy-acrylic blend resins for autodeposition have also been developed as described in U.S. Pat. No. 7,138,444, but these coatings provide a low gloss, semi-matte finish.

Autodeposition compositions are usually in the form of a liquid, usually aqueous solutions, emulsions or dispersions in which active metal surfaces of inserted objects are coated with an adherent resin or polymer film that increases in thickness the longer the metal remains in the bath, even though the liquid is stable for a long time against spontaneous precipitation or flocculation of any resin or polymer, in the absence of contact with the active metal. When used in the autodeposition process, the composition when cured forms a polymeric coating. "Active metal" is defined as metal that spontaneously begins to dissolve at a substantial rate when introduced into the liquid solution or dispersion. Such compositions, and processes of forming a coating on a metal surface using such compositions, are commonly denoted in the art, and in this specification, as "autodeposition" or "autodepositing" compositions, dispersions, emulsions, suspensions, baths, solutions, processes, methods or a like term. Autodeposition is often contrasted with electrodeposition. Although each can produce adherent films with similar performance characteristics, the dispersions from which they are produced and the mechanism by which they deposit are distinctly different. Electrodeposition requires that metal or other objects to be coated be connected to a source of direct current electricity for coating to occur. No such external electric current is used in autodeposition.

Typical autodeposition coatings currently commercially available, including epoxy-acrylic based systems that provide good corrosion resistance, have a low gloss finish and may include surface inconsistencies. In many industries, the low gloss finish of the autodeposition primer was perfectly satisfactory for the application. For example, conventional autodeposition coatings have been used as primers to be subsequently coated with paint in order to achieve a glossy, "show surface" appearance. Such autodeposition primer compositions have been utilized in numerous technical applications, such as automotive components, agricultural machinery, appliances, too numerous to mention here, that require anti-corrosion and proper adhesion properties for subsequent coatings.

In certain applications, the autodeposition coating has been used without the need for topcoating. Generally, due to the low gloss nature of commercially available autodeposition coatings, this use has been limited to non-show surfaces, for example in shock absorbers and automotive seating tracks. Although autodeposition coatings have been utilized for decades in these coating instances, a smooth, glossy, improved appearance with good corrosion and adhesion characteristics was not readily forthcoming. There are incidences where an improved appearance of the autodeposition coating is desired without the need for subsequent coating operations, and this has been an unmet need in the industry.

In the prior art, certain epoxy or epoxy-acrylic resins used for autodeposition applications were generally made by preparing solutions of epoxy resin and acrylic monomer in organic solvent(s). The resulting mixture was dispersed in water with surfactant, mechanically dispersed to a desired particle size and then polymerized. Because a high concentration of solvent is undesirable in an autodepositing coating bath, these solvent-rich emulsions required removal of solvent by distillation techniques known in the art. The resulting polymerized resin could then be mixed with other components and used as a component of an autodeposition coating bath. The bath forms a polymeric coating when autodeposited on a metal surface and cured. Low solvent/no solvent epoxy-acrylic autodeposition coating compositions have been developed which eliminate and/or minimize the need for process solvents, which had caused increased manufacturing costs.
WO 2004/007443 A2 for example discloses high solids epoxy-based autodeposition coating materials obtained as an aqueous dispersion upon polymerization of ethylenically unsaturated monomers in the presence of epoxy pre-polymers and a surfactant in an aqueous system. However, the appearance of these epoxy-acrylic resin based coatings had some shortcomings such as high surface roughness and low gloss.

As discussed above, previous autodeposition formulations have been limited to applications where a semi-matte, low gloss finish was acceptable. Prior attempts to achieve a glossy appearance have not met with a high degree of success, particularly with epoxy-acrylic compositions. Direct-to-metal or corrosion protection thermoset primers, such as 2-components urethane, 2-components epoxy, and electrodeposited epoxies, are single phase low molecular weight polymeric systems with glossy, smooth finishes due to their low viscosity, but these systems lack edge corrosion performance. While traditional methods of enhancing appearance characteristics of a coating involved the use of flow additives, cosolvents, or plasticizers, among others, those solutions may impact coating volatile organic compound (VOC) content and environmental sustainability.

Previously, the characteristics of the epoxy and acrylic phases of the resin were incompatible, and had contributed to low gloss, matte and textured finish coatings. The present invention seeks to make compatible both phases and in doing so enhances the aesthetic and overall appearance properties of resulting coatings, by increasing gloss and reducing roughness, without loss of corrosion performance and without loss of adhesion to the metal substrate and any later applied coatings. Another aspect of the present invention is that the smoother, glossier coating of the invention may much easier to clean, and can be easily rinsed off by natural conditions on the roadway, thereby possibly lessening corrosion.

Up to now, autodeposition coatings have not been used successfully for automotive, "show" surfaces due to the lack of gloss and smoothness sufficient to meet manufacturer requirements. There has been an unmet need, particularly in the economy automotive market, to reduce the number of layers of paint required to achieve a "show surface without loss of corrosion performance. The coatings of the invention have both higher gloss and smoothness and may be used as a stand alone coating, such as a finish coating. In particular in the economy automotive market, these coatings may be useful for less expensive car body parts thereby providing customers with an attractive, glossy coating at lower cost.

### SUMMARY OF THE INVENTION

The present invention addresses these problems and discloses several aspects of new autodeposition compositions and bath chemistries which provided higher gloss and smoother appearance autodeposition coatings, methods of application thereof and coated articles. The autodeposition composition according to Claim 1 of the present invention comprises modified epoxy-acrylic resin obtained by use of a chain transfer agent which thereby reduced weight average molecular weight and narrowed molecular weight distribution of the resulting resin, which unexpectedly enhanced glossiness and smoothness, while maintaining other desirable properties, such as corrosion and physical performance characteristics, and good moisture barrier properties.

In one aspect of the present invention as defined in Claim 1, disclosed is an epoxy dispersion used in an autodeposition composition that provides the combined properties of an improved glossy appearance and smoothness, with adhesion and corrosion resistance performance to the autodeposition coating. The composition disclosed includes a narrowing of the range of molecular weight distribution. Although this somewhat differs in effect from an overall resulting lower molecular weight polymer, these two effects are interrelated in the present invention. Such a narrower range of molecular weight distribution contributes to the new glossy appearance, without any substantial loss of barrier properties.

A method of coating a metallic substrate is defined in claim 7 and an article of manufacture is defined in claim 8.

Furthermore, this invention teaches compositions and methods of making compatible the epoxy and acrylic portions of the epoxy-acrylic hybrid particles in the epoxy dispersion. The instant method enhances the microscopic compatibility between the two phases within the emulsion particles, thus greatly improving the glossiness and smoothness, as well as the overall appearance properties. To achieve the desired results of making compatible the epoxy and acrylic, the inventors first looked at the viscosity characteristics of the high molecular weight thermoplastic acrylic phase as it differs from the low molecular weight thermoset epoxy phase in the mini-emulsion polymerized particles used in the autodeposition composition. Introduction of chain transfer agents (CTA), such as thiol-containing compounds, significantly narrowed the range of molecular weight distribution, and reduced weight average molecular weight, while greatly enhancing asthetic characteristics of the coating, without any negative impact on performance. In this aspect of the invention, the molecular weight distribution is narrowed by discouraging high molecular weight polymer formation, thereby narrowing the distribution range to a lower molecular weight range.

In yet another aspect of the present invention, we disclose an autodeposition coating comprising a epoxy-acrylic cross-linked resin coating produced with thiol glycerine modified epoxy-acrylic mini emulsion resin based autodeposition compositions. When compared to coatings formulated with emulsions that contain other CTA additives and/or molecular weight reducing approaches, the present invention provided higher gloss and smoothness at lower thiol glycerine levels.

Further, the mini emulsion polymerization process plays a significant role in achieving the compositions of the invention. The introduction of thiol glycerine into traditional seeded or batched emulsion polymerization approaches did not provide an equivalent smooth and glossy surface as compared to that observed when utilizing the mini-emulsion process. For reasons that are not well-understood, the mini-emulsion process combined with the CTA, in particular the thiol glycerine, provided unexpected synergies in improving gloss and smoothness not otherwise obtained by use of either of these aspects alone.

In other aspects of the present invention, we disclose chemically modified epoxy-acrylic mini-emulsion resin containing compositions using various thiol-containing compounds, including thioglycerol, dodecane thiol, ethane thiol, and/or combinations thereof. The autodeposition coating made with the various thiol-containing compound modified emulsions improves the smoothness and gloss of the autodeposition coating surface. The modified coating composition using thioglycerol improves the flow and leveling of the autodeposition polymer substantially, which helps the coating to cover the areas where the polymer is insufficiently deposited by flowing from surrounding areas.

In one aspect of the invention, the polymer modification described herein allows reduction or elimination of flow additives and plasticizers from the polymer formulation thereby avoiding side effects such as introduction of VOC's, lowering corrosion performance, or other deleterious effects of the coating systems while using these types of additives.

In another aspect of the invention, a coated metal substrate, preferably comprising a ferrous or zinc metal surface, coated with an autodeposition bath comprising an autodeposition composition according to the invention, preferably a thioglycerol modified emulsion, is provided which has a smoother surface compared to an unmodified version of said emulsion. Desirably, the gloss level of the thioglycerol modified coating is greater than 85 gloss units at 60 degrees incident light, as compared to an unmodified epoxy-acrylic emulsion containing autodeposition coating composition, e.g. Aquence 930, commercially available from Henkel Corporation, Madison Heights, MI, which showed gloss levels of about 20-30 gloss units at 60 degrees incident light.

As disclosed above, numerous aspects of the present invention involve utilizing various chain transfer agents as modifiers to epoxy-acrylic mini-emulsion autodeposition compositions such as those commercially available from Henkel Corporation of Madison Heights, Michigan as the Aquence 900 Series.

In their investigations, the inventors found that not all chain transfer agents work equally well. For example, testing of trichloromethane, a known chain transfer agent, in the mini emulsion process produced resins whose resulting autodeposition coatings had insufficient gloss and smoothness. Likewise, use of the chain transfer agents with resin production processes, such as conventional seeded emulsion polymerization did not provide much improvement in gloss and smoothness.

Unless otherwise indicated, all percentages are percent by weight. Molecular weight is weight average molecular weight, measured by gel permeation chromatography (GPC), unless otherwise specified.

### BRIEF DESCRIPTION OF THE DRAWINGS

FIG. 1 shows Gel Permeation Chromatograph (GPC) analysis comparing the molecular weight distribution ranges of the resulting coatings from Example 7 (control) to the coatings of Examples 2, 4, and 6.
FIG. 1A shows Gel Permeation Chromatograph (GPC) analysis of the molecular weight distribution range of the resulting coating from Example 7 (TD-3002-BB lot 39090) a control.
FIG. 1B shows Gel Permeation Chromatograph (GPC) analysis of the molecular weight distribution ranges of the resulting coating from Example 4 (XQ3311-152a Emulsion).
FIG. 1C shows Gel Permeation Chromatograph (GPC) analysis of the molecular weight distribution ranges of the resulting coating from Example 2 (XQ3311-152b Emulsion).
FIG. 1D shows Gel Permeation Chromatograph (GPC) analysis of the molecular weight distribution ranges of the resulting coating from Example 6 (XQ3311-122b Emulsion).
FIG. 2 shows Gel Permeation Chromatograph (GPC) analysis comparing the molecular weight distribution ranges of the resulting coatings from Example 3 to Example 9.
FIG. 2A shows Gel Permeation Chromatograph (GPC) analysis of the molecular weight distribution ranges of the resulting coating from Example 3 (3372-137a emulsion; Injection 1; Result Id 15164), a mini-emulsion polymerization product.
FIG. 2B shows Gel Permeation Chromatograph (GPC) analysis of the molecular weight distribution ranges of the resulting coating from Example 9 (3379-64 emulsion; Injection 1; Result Id 15168). This formulation was 3372-137b, similar to Example 3, but made by non-mini-emulsion polymerization

### DETAILED DESCRIPTION OF PREFERRED ASPECTS

By combining the mini-emulsion polymerization process of resin production with a thiol-based chain transfer agent, unexpected improvements in gloss and smoothness of the resulting autodeposited coatings were observed. Of special interest, the thiol-containing compounds providing the best results include thiol-containing chain transfer agents including thioglycerol, dodecane thiol and ethane thiol.

Thiols are organo-sulfur compounds that are naturally acidic. The functional group of the thiol is a hydroxyl group with a sulfur atom replacing the oxygen atom. In this aspect of the invention, a thiol substituted glycerol acts as a molecular weight distribution reducing compound and may be used to modify many emulsions to provide smooth, high gloss coatings of surfaces. Such a thiol compounds may be utilized as a chain transfer agent, which will significantly reduce the molecular weight and narrow the molecular weight range of distribution, as well as greatly enhance the aesthetic characteristics of the coating without substantial negative impact on the barrier performance.

In one embodiment, a chain transfer agent of thioglycerol was added to the polymerization process, preferably before any surfactant had been added. The autodeposition coating made with the thioglycerol modified emulsion improves the smoothness and gloss of the autodeposition coating surface. The modification using thioglycerol improves the flow and leveling of the autodeposition polymer substantially, which helps the coating to cover any areas where the polymer is insufficiently deposited through improved flow from surrounding areas. The polymer modification by this technique can also help in reducing or eliminating the use of flow additives, plasticizers, etc. from the polymer formulation to improve the flow and smoothness of the autodeposition coating while avoiding side effects such as introduction of VOC's, lowering corrosion performance, etc. of the coating systems while using these type of additives.

The chain transfer agent, for example thioglycerol, may be added to the organic portion of the emulsion (epoxy and ethylenically unsaturated monomer blend) at room temperature. A solvent-less, mini-emulsion was prepared according to the teachings of U.S. 7,138,444, using the above organic blend and was subsequently polymerized to provide an epoxy dispersion useful in making autodeposition compositions suitable for use in autodeposition baths for depositing autodeposition coatings.

The thioglycerol appears to serve a dual purpose where it reacts with the epoxy resin present in the organic portion of the mini-emulsion to provide additional primary hydroxyl groups, while it also appears to act as a chain transfer agent during the polymerization of the ethylenically unsaturated monomers, thereby controlling not only the molecular weight of the acrylic portion which helps to improve the flow, but also reduces the molecular weight distribution range, which gives the glossy appearance. Gel Permeation Chromatography (GPC) analysis of the polymers showed reduction in polymer molecular weight distribution and reduction in weight average molecular weight of the polymer. In some embodiments, there is also a reduction in the amount of high molecular weight species in the polymer with addition of thioglycerol in the formulation.

Although the examples hereinbelow will provide detailed experimental percent by weight inclusions of the various thiol-containing compounds, various aspects of the invention include from 0.1 % to 2.0% thioglycerol, from 0.01 % to 4.0% dodecane thiol, and 0.01 % to 2.0% ethane thiol as being effective components.

The present invention, will be more readily understood by the following description of the components of the epoxy resin-ethylenically unsaturated monomer blend to which the chain transfer agents, including the thiol-containing agents, are added. Suitable epoxy monomer blends find utility when mixed with the molecular weight reducing chain transfer agents that contain thiols, described in more detail hereinbelow. Examples are included to provide disclosure of the full range of applicable thiol-containing modifications to the epoxy monomer blends.

Epoxy resin-ethylenically unsaturated monomer blends according to the invention are made by dissolving or dissolving and dispersing at least one epoxy resin in at least one ethylenically unsaturated monomer, optionally with latent cross-linker and/or coalescing agent, and then adding at least one chain transfer agent.

In accordance with the invention, a process for making an epoxy dispersion comprises the steps of: (a) dissolving an epoxy resin with at least one ethylenically unsaturated monomer to form a mixture and adding a chain transfer agent and any optional components; (b) dispersing the mixture of step (a) in water, optionally with surfactant, to form a crude particle dispersion, mechanically dispersing same to form a mini-emulsion; and (c) polymerizing the at least one ethylenically unsaturated monomer contained in the mini-emulsion to form an epoxy dispersion. The term "epoxy dispersion" as used herein means the dispersion resulting from mini-emulsion polymerization of the epoxy resin-ethylenically unsaturated monomer blend. It will be understood by those of skill in the art that the chain transfer is incorporated into the epoxy dispersion. The type and concentration of epoxy resin and ethylenically unsaturated monomer used can be varied to achieve specific performance properties such as corrosion resistance, flexibility, edge protection. The type and concentration of ethylenically unsaturated monomer used can also be exploited as a means to provide improved compatibility with various pigmentation types.

Epoxy resins useful in the present invention can be based on one or more epoxy resins which contain one or more hydroxyl groups. Such epoxy resins are well known substances and are described, for example, in the chapter entitled "Epoxy Resins" in Volume 6 of The Encyclopedia of Polymer Science and Engineering (Second Edition). Methods of use according to the invention are based on epoxy resins that contain within the same molecule: (i) one or more epoxide groups as well as (ii) one or more hydroxyl groups. Preferably, the epoxy resin used contains one or more hydroxyl groups and approximately two epoxide groups per molecule.

Epoxy resins are often described by the type of central organic moiety or moieties to which the 1, 2-epoxy moieties are attached. Examples of such central moieties are those derived from bisphenol A, bisphenol F and their analogs in which one or two -NH2 moieties are substituted for an equal number of -OH moieties in the bisphenol; novolac condensates of formaldehyde with phenol and substituted phenols and their amino analogs, the condensates containing at least two aromatic nuclei; triazine; hydantoin; and other organic molecules containing at least two hydroxyl and/or amino moieties each, in each instance with as many hydrogen atoms deleted from hydroxy and/or amino moieties in the parent molecule as there are epoxy moieties in the molecules of epoxy resin. Optionally, the 1, 2-epoxide moieties may be separated from the central moieties as defined above by one or more, preferably only one, methylene groups. Oligomers of such monomers, either with themselves or with other organic molecules containing at least two hydroxyl and/or amino moieties each, may also serve as the central organic moiety.

Epoxy resins useful for the present invention include glycidyl ethers of a polyhydric phenol, such as bisphenol A (a particularly preferred species of polyhydric phenol), bisphenol F, bisphenol AD, catechol and resorcinol.

Primarily for reasons of economy and commercial availability, it is generally preferred to utilize epoxy resins derived from bisphenol A in this invention. More particularly, epoxy moiety containing molecules utilized in this invention preferably conform to the general chemical formula: 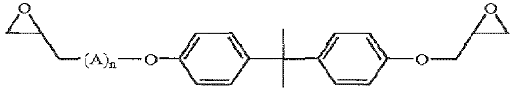 where: 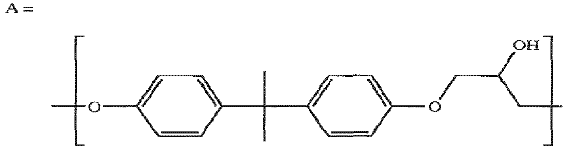 and "n" is an integer from 0 to 50. If such epoxy resins are to be used directly as the resin component of the present invention, "n" is preferably an integer within the range from 1-30 so that each molecule contains at least one hydroxyl group. Commercially available epoxy resins of this type are normally mixtures of molecules having somewhat different "n" values and different numbers of epoxy groups. Preferably, the epoxy resin mixture used has a number average molecular weight in the range of from 350 to 5,000, more preferably in the range from 400 to 3000. Preferably, the average number of epoxide groups per molecule in the epoxy resin mixture is in the range from 1.7 to 2.5, more preferably in the range from 1.9 to 2.1. The epoxy resin mixture may contain resin molecules in which n=0.

Other suitable epoxy resins include chain-extended epoxy resins as well as flexibilizing epoxy resins. In the former, a chain extender is utilized to react individual epoxy resin molecules through their epoxy groups so as to form a polymer which is higher in average molecular weight than the starting epoxy resin(s). A "flexibilizing epoxy resin" may be defined as an epoxy resin which when cured by itself with diethylene triamine (DETA) has a durometer Shore D reading not greater than 45. Suitable flexibilizing epoxy resins include those compounds containing at least one epoxide group per molecule and one or more groups capable of increasing the flexibility of the cured autodeposited coating such as, for example, long aliphatic chains (e.g., polymethylene chains corresponding, for example, to the structure -(CH₂)ₙ- wherein "n" is preferably greater than 3, more preferably greater than 6. The polymethylene chains can be in the backbone of the flexibilizing epoxy resin and/or pendent thereto), polyester chains (especially those formed by condensation of aliphatic diacids and glycols or glycol oligomers), polyoxyalkylene chains (e.g., polyether chains corresponding to the structure ((CH₂)ₙ--CHR-0-)m-, where: "n" is 0-3, "m" is 2 or greater, and R is H or alkyl). A particularly preferred flexibilizing epoxy resin is a difunctional epoxy derived from cardanol (a phenol substituted with a long chain unsaturated hydrocarbon group which is obtained from cashew nut oil) having an epoxy equivalent weight of 350.

Suitable ethylenically unsaturated monomers include vinyl aromatic hydrocarbons such as styrene and substituted styrenes, vinyl aliphatic hydrocarbons, ethylenically unsaturated acids such as acrylic and methacrylic acid as well as alkyl and hydroxyl-alkyl esters of such acids. Examples include butyl acrylate, methyl methacrylate, and hydroxyethyl methacrylate. Acrylonitrile, methacrylonitrile, acrylamide, and methacrylamide are also suitable. Combinations of any of the above monomers may find utility as well.

Ethylenically unsaturated monomers with anionic functionality are typically used. Anionic functional monomers, when co-polymerized into an emulsion or aqueous solution polymers, provide a "bound" source of ionic charges to effectively stabilize the emulsion polymer particles both during polymerization and subsequent formulation into autodeposition compositions. One advantage offered is to minimize or eliminate the use of an external surfactant. In addition, these anionic functional monomers may provide a "bound" source of sulfate or sulfonate groups to the polymer necessary for autodeposition film formation to occur. Examples of suitable anionic functional monomers include, but are not limited to, 2-sulfoethyl methacrylate, 2-acrylamido-2-methylpropanesulfonic acid, styrene-sulfonic acid, vinylphosphonic acid, phosphate monomers such as PAM-100 and PAM-200 phosphate ester monomers available from Rhodia and corresponding salts of these monomers.

In one embodiment, phosphate monomers such as PAM-100 and PAM-200 available from Rhodia and corresponding salts of these monomers can be used as a portion of the ethylenically unsaturated monomer. The use of phosphate monomers such as PAM-100 and PAM-200 can provide improvements in mechanical and adhesive properties. It is generally preferred for the phosphate monomer(s) to be added after dispersion of the epoxy resin and ethylenically unsaturated monomer and before or during polymerization of the monomer.

In another aspect of the present invention, hydroxyl functional ethylenically unsaturated monomer may be used. The use of hydroxyl functional ethylenically unsaturated monomer provides for a dispersion that has greater solvent resistance when used in conjunction with hydroxyl reactive crosslinking or curing agents. Examples of hydroxyl functional ethylenically unsaturated monomer include 2-hydroxyl methacrylate, hydroxyl acrylate, and hydroxyl propyl methacrylate.

The dispersions and coating compositions of the present invention may also contain one or more substances capable of reacting with the polymer end product to provide a crosslinked polymeric matrix in the cured coating. In one embodiment of the invention, at least a portion of the curing agents (sometimes referred to as crosslinking agents) only react with the epoxy dispersion end-product at the elevated temperatures typically encountered during the curing stage of the composition. Such curing agents are often referred to in the art as "latent" curing agents or hardeners because they only become activated when heated to a temperature well in excess of normal room temperature. The use of latent curing agents is preferred in the present invention so that substantial cross linking of the epoxy resin or epoxy pre-polymer may be avoided prior to and during deposition on the surface of an article. In the case of metallic articles the deposition is typically carried out at temperatures of from 20°C to 60°C. However, if so desired, minor amounts of more reactive curing agents may also be present in addition to the latent curing agents so as to accomplish partial crosslinking prior to deposition on an article. In one embodiment of the invention, at least one latent curing agent such as, for example, a blocked isocyanate is incorporated into the mixture before the at least one ethylenically unsaturated monomer is polymerized. Preferred blocked isocyanates comprise moderately reactive isocyanates such as aliphatic isocyanates and more sterically hindered and/or more acid stable blocking groups, such as those derived from the lactam of 6-aminohexanoic acid and/or benzotriazole. Typical stoving temperatures for such crosslinking agents are at or above 160°C. Utilization of such crosslinking agents avoids premature crosslinking from occurring during the polymerization process where temperatures are typically between ambient temperature and 100°C. Vestagon B1530 from Degussa Corporation is one representative example.

The preferred crosslinking agents are generally selected so as to be capable of reacting with the hydroxyl groups and/or intact epoxide groups, which are present in the epoxy resin and/or ethylenically unsaturated monomer. Hydroxyl groups are inherent to epoxy resins as hydroxyl is formed upon ring opening of the epoxide, independent of whether this ring opening occurs in the advancement of the epoxy resin, or by reaction of residual epoxy with acids such as HF in the coating bath. Hydroxyl groups can also be imparted if hydroxyl functional ethylenically unsaturated monomer is used.

Suitable crosslinking agents used in the present invention react with epoxide or hydroxyl moieties on the reactive epoxy-acrylic polymer in the epoxy dispersion at the elevated temperatures found in the curing stage of the process, e.g., at least 100°C. The preferred crosslinking agents are believed to be reactive with hydroxyl groups as well as with any intact epoxide groups that may still be present in epoxy-acrylic polymer once it has been placed in the relatively acidic environment of an autodeposition bath composition. Most, so or all, of such epoxide groups are believed likely to be hydrolyzed to produce hydroxyl groups. Furthermore, even if epoxy groups remain as such, there will normally be at least some hydroxyl groups available for crosslinking reactions such as esterification, etherification, and urethane formation.

Crosslinking agents are preferably molecules that are capable of rapid chemical addition reactions with epoxy and/or hydroxyl only when heated, but which exhibit little or no reactivity towards such moieties at temperatures preferably of 100° C, 120° C, 130°C, 140°C and 150°C. Such crosslinking agents are sometimes referred to in the art as latent curatives. Examples of suitable crosslinking agents include (a) molecules that contain: at least two epoxy and/or hydroxyl- reactive functional groups, such as thiol, hydroxyl, carboxyl, and carboxylic acid anhydride, and (b) molecules that contain at least two blocked isocyanate groups, each such group being blocked with a conventional blocking agent or internally blocked by formation of a uretdione structure, so that the blocked isocyanate group does not react at any appreciable rate at room temperature with hydroxyl groups but does react rapidly with such groups after being unblocked by heating to a temperature in excess of 100°C. The blocking groups can be derived from any suitable aliphatic, cycloaliphatic, aromatic, or alkylaromatic monoalcohol, monoamide, monoamine, or monoxime. Ketoximes are useful when unblocking at relatively low temperatures such as 120°C is desired. More sterically hindered and/or more acid stable blocking groups, such as those derived from the lactam of 6-aminohexanoic acid and/or benzotriazole are preferred if unblocking is desired to begin at a substantial rate only at or above 160°C.

The use of isophorone diisocyanate-based, epsiloncaprolactam blocked isocyanates as crosslinker, is particularly preferred. If a blocked isocyanate-type crosslinker is utilized, the ratio of blocked isocyanate groups to hydroxy groups (NCO:OH) typically will be in the range of 0.05 to 1.2, more preferably 0.1 to 0.5. Other examples include blocked hexamethylene diisocyanates (HMDI).

Chain transfer agents, sometimes called modifiers or regulators, act to reduce the molecular weight by only allowing monomers to form chains of relatively short lengths due to chain termination and re-initiation. Chain termination occurs when two free radicals react to form new molecules without any radical ends. Chain transfer occurs when a radical chemically reacts with a non-radical species, resulting in yet another radical species unconnected to the first species. Most commonly, the chain end radical tries to bond with the weaker of the two bonds, and one atom becomes bonded to the chain end. When this happens, the current chain formation is terminated, and a new chain may or may not start, depending on the reactivity of the new radical end. Molecular weight is diminished when these reactions take place, without altering the overall rate of conversion of monomer to polymer.

Many chain transfer agents may be added to the reaction mixture in order to provoke chain termination, including mercaptans, commonly known as thiols. Representative of suitable thiols for these various aspects of the present invention include various thiol-containing compounds, particularly thiol glycerine, dodecane thiol, and ethanol thiol, among others. Combinations of these chemicals may also find utility in some applications. These chain transfer agents may be employed at concentrations of the thiol-containing compounds in the epoxy resin- ethylenically unsaturated monomer blend, in increasing order of preference, of at least 0.01, 0.2, 0.30 0.32, 0.34, 0.35, 0.36, 0.38, 0.40, 0.5, 0.6, 0.7, 0.8, 0.9 or 1.0% and not more than in increasing order of preference, 10.00, 9.00, 8.0, 7.0, 6.0, 5.0, 4.0, 3.0, 2.0 or 1.5% each of these ranges being based on emulsion solids. If too much chain transfer agent is used, the epoxy dispersion may be unstable in the autodeposition bath. If too little is used the desired effect of making compatible the epoxy resin and the ethylenically unsaturated monomer in the epoxy dispersion will not be achieved.

When utilizing a deliberate addition of thiol-containing compounds in order to reduce molecular weight, concentration of the thiol-containing compound can be, in increasing order of preference, at least 0.01 % and not more than 10.00%, yet especially in increasing order of preference, 0.1% to 1.00%, each of these ranges being based on emulsion solids. Depending upon the additional use of initiators, the amount of chain transfer agent may be reduced provided that the increase in initiator concentration is not so great as to adversely affect corrosion performance.

Desirably sufficient quantities of at least one chain transfer agent are present sufficient to narrow the molecular weight distribution such that, in increasing order of preference, at least 75, 77, 80, 82, 84, 85, 86, 87, 88, 89, 91, 92, 93, 94, or 95% by weight of said polymer lies in a range of between 25,000 to 1,000 u (Daltons), measured as weight average molecular weight.

In one embodiment, the effect of use of chain transfer agents herein is shown by the reduction in amount of high molecular weight species, specifically species having molecular weights in excess of 250,000 u (Daltons) are to less than 3% by weight in the resulting epoxy dispersion. In contrast, the prior art epoxy dispersions according U.S. Patent 7,138,444 contain approximately 33 % by weight of such species.

Generally, the presence of a coalescing agent component in an autodeposition composition according to the invention is preferred. This component is preferably selected from the group consisting of monoethers and monoesters of glycols, preferably glycols with at least one terminal hydroxy group. Monoethers of ethylene glycol are readily available and effective in blistering reduction but are restricted in use by antipollution laws in many locations and also have been found to be more likely than monoethers of propylene glycol to destabilize the emulsions formed in products according to the invention, such that monoethers of propylene glycol, particularly the n-butyl and phenyl monoethers of propylene glycol, are preferred from this class. When glycol monoethers are used, their percentage in an autodepositing liquid composition according to the invention preferably is within the range from 5 to 30, preferably 18 to 26% of the total solids in the composition.

Monoesters are slightly less preferred than monoethers where maximum corrosion resistance in the final product is needed, but are generally effective at lower concentrations and may therefore be preferred if economy and/or compliance with stringent solvent emission standards is more important than maximum corrosion resistance. A particularly preferred monoester is 2, 2, 4-trimethy-1, 3-pentanediol mono 2-methyl propionate. This and other monoesters if used preferably are present in an amount of at least 0.5% of the total autodepositing liquid composition and more preferably are present in amounts of 1-10, and preferably 2.5-5%.

Dispersion of the epoxy pre-polymer and ethylenically unsaturated monomer in water can be accomplished by procedures known in the art. In one embodiment, the dispersion of the epoxy pre-polymer and ethylenically unsaturated monomer in water is accomplished by emulsification. Emulsification of the epoxy pre-polymer and ethylenically unsaturated monomer in water may be accomplished by any of the emulsification procedures known in the art. The desired result is a fine particle dispersion of epoxy pre-polymer and ethylenically unsaturated monomer containing micelles. Other desired coating components and additives may be emulsified with the epoxy pre-polymer and ethylenically unsaturated monomer.

In one embodiment, the emulsification procedure involves a two-stage process in which a solution of the epoxy pre-polymer, ethylenically unsaturated monomer, and any added components, is emulsified in water to form a crude dispersion of epoxy pre-polymer and ethylenically unsaturated monomer containing micelles. The crude dispersion is then mechanically dispersed to form a fine particle dispersion. In one embodiment, the crude dispersion is subjected to at least one particle size refinement stage. For example, the crude dispersion can be subjected to at least one particle size refinement stage in which the crude dispersion is forced through a narrow aperture to form the fine particle dispersion.

In one embodiment the epoxy pre-polymer, ethylenically unsaturated monomer, and any added components is microfluidized or homogenized in a microfluidizer or homogenizer having a chamber pressure of from 408 atm (6,000 psi) to 1021 atm (15,000 psi). As used herein, "microfluidized" and "homogenized" refer to a mechanical process for reducing the size of the droplets of the epoxy pre-polymer, ethylenically unsaturated monomer, and any added components. The epoxy pre-polymer, ethylenically unsaturated monomer, and any added components form droplets in the water. The average diameter of the droplets is from 1 to 10 µm (microns) prior to microfluidization or homogenation. The average diameter of the epoxy pre-polymer, ethylenically unsaturated monomer, and any added components droplets is reduced to less than 1 µm (micron) during microfluidization or homogenization. Preferably, the average diameter of the droplets is reduced to 0.01 to 0.5 µm (microns) during microfluidization or homogenation. During the microfluidization, the mixture containing the epoxy pre-polymer, ethylenically unsaturated monomer, any added components, and water is preferably passed through small channels under a pressure of from 544 atm (8,000 psi) to 817 atm (12,000 psi) at a speed of approximately 213 m/s (700 ft/sec). The interaction intensity, which involves shear, impingement, distention, and cavitation forces, on the mixture with the microfluidizer or homogenizer controls the size and distribution of the droplets in the mixture and ultimately the size of the polymer particles.

A preferred microfluidizer is available from Microfluidics Corporation. Preferred homogenizers are available from APV invensys. In the Microfluidics microfluidizer, a mixture is pumped into a specially designated chamber in which fluid sheets interact at ultrahigh velocities and pressures up to 457 m/s (1500 ft/sec) and 1088 atm (16,000 psi), respectively. The fixed microchannels within the chamber provide an extremely focused interaction zone of intense turbulence causing the release of energy amid cavitation and shear forces. Most preferably, the Microfluids microfluidizer is set at 544 atm (8,000 psi) to 817 atm (12,000 psi) chamber pressure.

In one embodiment, an emulsifying agent, such as a surfactant, is used to further or aid in the formation of the dispersion in water. Anionic surfactants are generally preferred, although amphoteric as well as nonionic surfactants may also be utilized. Combinations and mixtures of different surfactants may be employed. One class of preferred anionic surfactants for use in the present invention are ether sulfates that conform to general formula:

M⁺-O--SO₂--O--(CH₂-CH₂--O)ₚ--R"

wherein: M represents a monovalent cation or monovalent fraction of cation of higher valence, preferably, sodium or ammonium, more preferably ammonium; p is a positive integer that preferably is between 2 and 7; and R" represents an alkyl or alkylaryl moiety, more preferably an alkyl phenol moiety. Independently, R" preferably has 8 30 and more preferably has 15 20 carbon atoms. Other suitable commercially available anionic emulsifiers include Dowfax^{Tm} 2A-1 (sodium salt of alkylated diphenyl oxide disulfonate); Abex^{Tm} 26-5; Texapon^{Tm} E-12 and K-12; Rhodapex^{Tm} CO-128, -433, and -436 and EP-100, -110, -115, - 120, and -227; Disponsil^{Tm}AES-13, and Aerosol^{Tm} OT (sodium dioctylsulfosuccinate), and Polystep^{Tm}B40 from Stepan.

The single most preferred anionic emulsifying agents are salts of lauryl sulfate. The preferred amount of active anionic emulsifying agent is from 0.1 to 5 wt % based on the weight of the total composition of solids and is preferably from 0.7 to 2 wt %. In one embodiment a polymerizable anionic surfactant is used to further or aid in the formation of the dispersion in water. Polymerizable anionic surfactants are widely known in the industry. Requirements for polymerizable anionic surfactants used in the present invention are that they possess anionic surfactant structure in addition to a group capable of participating in radical polymerization. Utilization binds the surfactant to the polymer in the dispersion, which improves stability and reduces levels of free surfactant required. Examples of polymerizable anionic surfactants include sodium allyloxy hydroxypropyl sulfonate, and propenyl modified nonylphenol ethoxylate sulfate salts such as Hitenol A-10, Hitenol BC-10 and Hitenol BC-05 (products of DKS International, Inc.). Hitenol BC-10 and Hitenol BC-05 are particularly preferred.

In accordance with the purpose of the invention, as embodied and broadly described herein, the invention comprises a process for making an epoxy dispersion, the process comprising the steps of: (a) forming the epoxy resin-ethylenically unsaturated monomer blend; (b) dispersing the mixture of step (a) in water with at least one surfactant to form a fine particle dispersion; and (c) polymerizing the at least one ethylenically unsaturated monomer contained in the fine particle dispersion to form an epoxy dispersion, wherein at least one water soluble initiator and/or at least one organic soluble initiator is added prior to step (c).

Essentially any type of free radical generator can be used to initiate polymerization of the monomers. For example, free radical generating chemical compounds, ultraviolet light or radiation can be used. A radical initiator may be added to facilitate the polymerization of the ethylenically unsaturated monomer within the epoxy containing micelle of the dispersion. Relative degrees of grafting, if any, between epoxy pre-polymer and polymerized monomer can be achieved to provide for specific molecular weights and specific performance ends by careful selection of initiator type. Initiators may be added at various points in the process of forming the dispersion. In one embodiment, the initiator is organic soluble and is introduced in the organic phase prior to dispersion of the epoxy pre-polymer and ethylenically unsaturated monomer in water. In another embodiment, the initiator is water-soluble and is introduced after dispersion of the epoxy pre-polymer/ethylenically unsaturated monomer mixture in water. In another embodiment both organic soluble initiators and water-soluble initiators are added. In another embodiment an organic soluble initiator is introduced after the aqueous dispersion is formed. In this embodiment, the organic soluble initiator is added directly or dissolved in a co-solvent and dripped into the dispersion.

Examples of suitable organic soluble initiators include peroxides, peroxy esters as well as organic soluble azo compounds. Benzoyl peroxide is one preferred example. Examples of suitable water-soluble initiators include hydrogen peroxide, tert-butyl peroxide, t-butyl peroxtoate, hydroperoxides such as t-butyl hydroperoxide, alkali metal (sodium, potassium or lithium) or ammonium persulfate; azo initiators such as azobisisobutyronitrile or 2, 2'-azobis(2-amidinopropane)dihydrochloride; or mixtures thereof. Ammonium persulfate and Vazo 68 WSP (Available from E.I. DuPont de Nemours) are two preferred examples. In one embodiment such initiators may also be combined with reducing agents to form a redox system. Examples of reducing agents include sulfites such as alkali metal meta bisulfite, or hyposulfite, sodium thiosulfate, or isoascorbic acid, or sodium formaldehyde sulfoxylate. The free radical precursor and reducing agent together, referred to as a redox system herein, may be used at a level of from 0.01% to 5%, based on the weight of monomers used. Examples of redox systems include: t-butyl hydroperoxide/sodium formaldehyde sulfoxylate/Fe(III); t-butyl hydroperoxide/isoascorbic acid/Fe(III); and ammonium persulfate/sodium bisulfite/sodium hydrosulfite/Fe(III). In another embodiment, sodium formaldehyde sulfoxylate is used to initiate polymerization in conjunction with at least one anionic surfactant, such as sulfates and sulfonates in the absence of peroxides. Incorporation of anionic endgroups resulting from this method provides an increased level of stability for the emulsion as well as the corresponding autodeposition bath. Nonylphenol ethoxylate sulfate ammonium salt and sodium lauryl sulfate are two suitable Examples.

In one embodiment, the polymerization of the ethylenically unsaturated monomer is carried out with applied heat. A wide variety of temperatures can be employed and the specific optimum temperature varies with each initiator. Generally, persulfates are processed at a temperature from 75 to 90°C. Process temperatures for peroxides and azo compounds are generally chosen such that the half-life decomposition rate falls from 1 to 120 minutes. Alternatively, redox initiation methods are widely known in the art by which polymerization can be conducted at ambient or near ambient conditions.

A solvent may be used as a medium for combining the epoxy resin, ethylenically unsaturated monomer, crosslinking agent(s), and added components. The solvent component is not believed in most cases to contribute any desirable characteristic to the final autodeposition compositions. The solvent component may be removed from the emulsion by distillation under reduced pressure. However, in many cases the solvents do not diminish the technical benefits of the final autodeposition compositions according to the invention and may be left in place in the autodeposition composition. Any such residual solvent will normally be expelled during the elevated temperatures found in the curing stage at the end of the autodeposition process. Optional solvents are mixtures of (i) aromatic hydrocarbons with from 6 to 10 carbon atoms and (ii) ketones with from 3 to 8 carbon atoms. Preferably, the amount of solvent used to mix the materials is at least 10 wt % of the combined weight of the components without water. The most preferred solvents are toluene and methyl isobutyl ketone (MTBK).

An autodeposition composition according to the invention comprises epoxy dispersion as described herein in water and may also contain a number of additional ingredients. Such additional ingredients include fillers, biocides, foam control agents, pigments and soluble colorants, and flow control or leveling agents. The compositions of these various components maybe selected in accordance with the concentrations of corresponding components used in conventional epoxy resin-based autodeposition compositions, such as those described in U.S. Pat. Nos. 5,500,460, and 6,096,806.

Suitable flow control additives or leveling agents include, for example, the acrylic (polyacrylate) substances known in the coatings art such as the products sold under the trademark MODAFLOWTM by Solutia, as well as other leveling agents such as BYK-310 (from BYK-Chemie), PERENOLTM F-60 (from Henkel), and FLUORADTM FC-430 (from 3M).

Pigments, filler components or soluble colorants may generally be selected for compositions according to this invention from materials established as satisfactory for similar uses in other autodepositing liquid compositions. Suitable materials include carbon black, phthalocyanine blue, phthalocyanine green, quinacridone red, hansa yellow, and/or benzidiac yellow pigment, oxidizer and acid stable titanium dioxide.

To prepare an autodeposition coating bath composition suitable for coating a metallic substrate by autodeposition, the epoxy dispersion described hereinabove may be combined with at least one autodeposition accelerator component, which is capable of causing the dissolution of active metals (e.g., iron) from the surface of the metallic substrate in contact with the bath composition. Preferably, the amount of accelerator present is sufficient to dissolve at least 0.020 gram equivalent weight of metal ions per hour per square decimeter of contacted surface at a temperature of 20°C. Preferably, the accelerator(s) are utilized in a concentration effective to impart to the bath composition an oxidation-reduction potential that is at least 100 millivolts more oxidizing than a standard hydrogen electrode. The autodeposition accelerator component is preferably chosen from the group consisting of hydrofluoric acid and its salts, fluorosilicic acid and its salts, fluorotitanic acid and its salts, ferric ions, acetic acid, phosphoric acid, sulfuric acid, nitric acid, hydrogen peroxide, peroxy acids, citric acid and its salts, and tartaric acid and its salts. More preferably, the accelerator comprises: (a) a total amount of fluoride ions of at least 0.4 g/L, (b) an amount of dissolved trivalent iron atoms that is at least 0.003 g/l, (c) a source of hydrogen ions in an amount sufficient to impart to the autodeposition composition a pH that is at least 1.6 and not more than 5, and, optionally, (d) hydrogen peroxide.

Hydrofluoric acid is preferred as a source for both the fluoride ions as well as the proper pH. Ferric fluoride can supply both fluoride ions as well as dissolved trivalent iron. Accelerators comprised of HF and FeF3 are especially preferred for use in the present invention.

A coating process according to this invention will preferably comprise the steps of: (a) contacting an object with an active metal surface with the aforedescribed autodeposition composition for a sufficient time to cause the formation of a film of the pre-polymer (which film may also contain certain other components of the autodeposition bath composition, particularly the crosslinker of a predetermined thickness on the metal surface, (b) separating the coated metal surface from contact with the autodeposition bath composition, (c) rinsing the coated metal surface to remove at least some of the absorbed but otherwise unadhered components of the bath composition from the more adherent portion of the coating, and (d) heating the rinsed surface to form a final cured coating. Without wishing to be bound by theory, it is believed that when the wet adherent coating is heated, the epoxy resin and crosslinker present in the epoxy dispersion react to form a thermoset polymeric matrix.

Ordinarily a metal surface preferably is degreased and rinsed with water before applying an autodeposition composition. Conventional techniques for cleaning and degreasing the metal surface to be treated according to the invention can be used for the present invention. The rinsing with water can be performed by exposure to running water, but will ordinarily by performed by immersion for from 10 to 120 seconds, or preferably from 20 to 60 seconds, in water at ordinary ambient temperature.

Any method can be used for contacting a metal surface with the autodeposition composition'of the present invention. Examples include immersion (e.g., dipping), spraying or roll coating. Immersion is usually preferred.

Preferably, contact between an active metal surface and the autodeposition bath compositions of this invention is for a time between 0.5 and 10 minutes, more preferably between 1 and 3 minutes. Contact preferably is long enough to produce a final film thickness of from 10 to 50 µm (microns), preferably 18 to 25 µm (microns).

Optionally, a reagent capable of causing additional desirable reactions in or modifications of the coated film may be included in the rinse used after cessation of contact between the wet coated surface and the bulk of the autodeposition bath composition. Such a reagent may also be brought into contact with the wet coated film after rinsing with water alone. Although the autodeposition bath compositions of the invention generally produce wet coated films that can be heated after simple rinsing with tap or deionized water to give good quality final films, the corrosion resistance of the cured coating may be further improved by rinsing with an aqueous solution comprising an alkaline earth metal compound such as calcium nitrate as described in co-owned U.S. Pat. No. 6,613,387.

Final heating of the rinsed wet coated and optionally post-treated autodeposited film is preferably at a temperature of greater than 100°C. The curing temperature must be sufficiently high so as to effect reaction of the latent crosslinker with the epoxy-and hydroxyl- reactive functional groups of the epoxy dispersion present in the autodeposited film. Generally, the final heating temperature is selected to dry and cure the coating at a temperature within the range from at least 100°C to 300°C, more preferably between 130°C and 240°C, for a time of 3 to 60 minutes, more preferably for 10 to 30 minutes.

The heating can be performed in multiple stages, if desired. For example, in a first stage lasting from 5 to 15 minutes, the coated substrate is heated to a peak temperature of 55°C to 65°C to flash off most of the residual water in the coating and in a second stage lasting from 30 to 50 minutes, the coated substrate is heated to a peak temperature of 175°C to 195°C. The peak temperature preferably is attained in preferably, no more than 10 minutes after the first heating stage has been completed.

Coatings according to the invention are also compatible with co-cure processes wherein a paint is applied to a dewatered uncured autodeposited coating and the two layers are cured together, see for example WO 2009088993.

Autodeposition compositions employed in the present invention can be used for treating surfaces of iron, zinc, iron alloy and zinc alloy, and particularly steel portions of various components such as automobile sheet components and automobile components such as shock absorbers, jacks, leaf springs, suspension components and brackets, and components of furniture such as drawer rails. Autodeposition coatings are particularly well suited for indoor metal furniture that is subjected to wear and surface impacts, e.g., filing cabinets, filing shelves and desks.

By reducing the molecular weight of the polymerized compound, the coating can be wetted out and a glossier appearance results. As described above in the Background of the Invention, there are many applications for a glossy autodeposited composition coating, especially for vehicles made in developing countries where all they want is the autodeposition coating, nothing to follow. In those cases, if a glossy autodeposition coating can be good enough for their standards, the present invention can deliver.

ASTM Standard Test D523 is the standard test to measure glossiness. In the examples below, you will notice the gloss values with respect to 60°, and this is a measurement value coming from the ASTM D523 test method which is used to evaluate the difference in gloss of dried films of emulsion floor polishes when the light reflected at a 60°angle is measured. This test method covers the determination of the 60° specular gloss of films after application to a substrate. Specular gloss is one of several related appearance attributes that produce the sensation of glossiness.

### EXAMPLES

A method of preparing a base of autodeposited mini-emulsion, coating bath, and processing and evaluating the resulting substrates is shown below using Aquence 900 Series mini-emulsion commercially available from Henkel Corporation, utilizing polymerization procedures, as follows:

To a clean, 2-liter, 4-necked flask, equipped with agitator, nitrogen inlet, condenser and addition funnel was added a) 171.4 grams of epoxy resin (ER) (solid epoxy resin with epoxy equivalent weight around 900), and b) 21.8 grams of blocked isocyanate (BI)(caprolactam blocked isocyanurate of isophorone diisocyanate) were added to the flask. A homogeneous mixture of c) 56.5 grams of styrene (STY), d) 51.0 grams n-butyl acrylate (BA), e) 2.8 grams of methacrylic acid (MAA), f) 6.4 grams of hydroxyl ethyl methacrylate (HEMA), g) 54.5 grams of methyl methacrylate (MMA), and h)14.6 grams of Ester alcohol (2,2,4-Trimethyl-1,3-pentanediol monoisobutyrate Propionic acid) (EA) was added to the flask and mixed until the epoxy resin (solid epoxy resin with epoxy equivalent weight around 900)(ER) and the blocked isocyanate (caprolactam blocked isocyanurate of isophorone diisocyanate)(BI) were dissolved. A homogeneous mixture of i) 16.8 grams of anionic surfactant (ammonium lauryl sulfate) (ALS) @28% NV and j) 578.1 grams of deionized water (DI) were added to the flask over a period of 10 minutes with mixing. The crude dispersion was removed from the flask and passed through an M-110F Microfluidizer® (a product of Microfluidics Corporation) at 612 atm (9,000 psi) to 681 atm (10,000 psi) to form a fine particle dispersion mini-emulsion of between 100 nm and 500 nm, where an average particle size was measured to be ∼250 nm.

The fine particle dispersion or mini-emulsion was loaded into a two (2) liter flask under nitrogen atmosphere equipped with an agitator, condenser and a nitrogen inlet, along with addition funnels. Then, k) 0.25 grams of 1% ferrous sulfate, 1) 0.12 grams of sodium formaldehyde sulfoxylate (SFS) and m) 5.0 grams of deionized water mixture were added respectively into the flask with mixing and then the contents of the flask was heated to 55°C. A mixture of n) 1.2 grams of sodium formaldehyde sulfoxylate and o) 10.2 grams of deionized water was then added to the flask at a uniform rate over a period of three hours. Midway through the addition period, a mixture of p) 1.8 grams of t-butyl hydroperoxide (t-B), and q) 10.2 grams of deionized water was added at a uniform rate over a period of 3 hours. During these additions, the contents of the flask were then heated to 65°C.

Once the addition was complete, the flask contents were maintained at 65°C for a period of one hour. The final measured solids were 36.4% by weight.

### One (1) Liter Coating Bath preparation:

In a first step to create an epoxy/acrylic anionically modified emulsion plus carbon black pigment slurry, 120.0 g of epoxy/acrylic anionically modified emulsion had 4.4g of black pigment slurry @ 40.5% solids added to it, and the materials were allowed to mix for 10-60 minutes. Then, an autodeposition bath was formulated in a 1.0 liter container, to which was added 40.0g of commercially available Starter 300 (including hydrogen peroxide, FeF₃, and HF) and 833.6 g of deionized water (DI), slowly under agitation. Finally, we added the remaining amount of water, and mixed the bath for one hour while maintaining the bath under agitation at all time, while measuring and adjusting bath parameters. The bath parameters were:

| | |
|---|---|
| Redox Value | 275-425 mV |
| Lineguard 101 meter reading | 100-350 µA (microamperes) |
| Total % non-volatile | 1-10% |
| Wet coating solid | 20-50% |
| Starter titration | 5-40 ml |
| Bath temperature | -6.67 to -3.89°C (20-25°F) |
| Conductivity | 1,200 - 4,500 µS (micro Siemens) |

### Coating:

Following standard procedures for coating Panels: Cold Rolled Steel (CRS) panels were coated in the bath as follows:
A. Cleaning
B. Warm Water rinsing
C. Deionized water rinsing
D. Treating with Aquence Processing bath
E. Water rinsing
F. Treating with Aquence® Reaction Rinse
The panels were oven cured at 50-200°C for 10 to 40 minutes oven time.

### Evaluating:

The process for evaluating the panels is as follows:
Dry Film Thickness was CRS 15-25 µm

### Film Gloss measurements:

Gloss is measured with Horiba Gloss meter @ 600; higher value indicated glossier finish. To measure the gloss readings in the results of the Examples, a gloss measuring unit utilizes standard ASTM D1455 and/or D523 test procedures, and we followed those procedures. To measure the gloss under various circumstances, we could send an incident light at a 60, 20 or 85 degree angle.

The relative values can be measured as follows:
High Gloss >80, and preferably >90,
Medium Gloss >40,
Low gloss Matte finish <30

| **Gloss Range with 60° Gloss Meter** | **Angle of Measurement of Incident Light** |
|---|---|
| If Semi Gloss - 10 to 70 GU | 60 ° |
| If High Gloss > 70 GU | 20 ° |

### Film Smoothness measurements:

Film Smoothness was measured with a roughness checker, i.e. a Sortronic 25 by Taylor Hobson Precision. Smoothness value Ra is measured in micrometer (µm). Lower values indicate smoother finish.

A bath concentrate may be prepared similar to the bath composition, but does not include any peroxide, FeF₃, or hydrofluoric acid, included as part of the commercially available "Starter 300" for sales or shipping. The bath concentrate may be made the same as the coating composition, but it is otherwise made without these three chemicals included. Rather, all the chemicals listed hereinabove with reference to the coating composition would be included except for the Starter 300 components, i.e. the peroxide, FeF₃, and/or hydrofluoric acid. That can be added to the concentrate and diluted with water to make the bath composition for autodepositing in accordance with the present invention. The concentration of the concentrate may be anywhere from 2 to over 20 times as concentrated as the bath composition.

For each example, the emulsion process, coating preparation procedures and coating application proceeded as described above, except as otherwise stated. Having these parameters in mind, we now look to the examples as modified in accordance with the present invention:

### Example 1 (3311-54).

In this example, we added a modifier of thiol glycerine to modify the molecular weight distribution of a base mini-emulsion (Aquence 900 Series from Henkel Corporation, as described above) with 0.5% thiol glycerine.

2.0 g mercaptan (thiol glycerine) (TG) was added to the process right before item (i) anionic surfactant (ammonium lauryl sulfate)(ALS) and (j) (DI water) and was allowed to continue mixing for more than 10 minutes. The rest of the emulsion process, coating preparation procedures and coating application proceeded as described above.

Results on cured coated panels:
Gloss (60°): 92
Ra value: 0.3 µm

### Example 2 (3311-152 b)

In this example, we added a new concentration of modifier of thiol glycerine to modify the mini-emulsion with 0.35% thiol glycerine.

**Table 1**

| | **a** | **b** | **c** | **d** | **e** | **f** | **g** | **h** | **i** | **j** | **k** | **l** | **m** | **n** | **o** | **p** | **q** |
|---|---|---|---|---|---|---|---|---|---|---|---|---|---|---|---|---|---|
| | ER | BI | STY | BA | MAA | HEMA | MMA | EA | ALS | DI | Fe²⁺ | SFS | DI | SFS | DI | t-B | DI |
| grams | 171.4 | 21.8 | 56.5 | 51 | 2.8 | 6.4 | 54.5 | 14.6 | 16.8 | 580 | 0.1 | 0.05 | 5 | 1.1 | 20 | 1.56 | 20 |

1.42 g thioglycerine was added right before item i and j addition and allow mixing for more than 10 minutes. Results on cured coated panels:
Gloss (60°): 92
Ra value: 0.3 µm

### Example 3 (3372-137 a)

In this example, we added a different concentration of modifier of thiol glycerine to modify the mini-emulsion with just 0.2% thiol glycerine (0.2% TG). See Table 2.

**Table 2**

| | **a** | **b** | **c** | **d** | **e** | **f** | **g** | **h** | **i** | **j** | **k** | **l** | **m** | **n** | **o** | **p** | **q** |
|---|---|---|---|---|---|---|---|---|---|---|---|---|---|---|---|---|---|
| | ER | BI | Sty | BA | MAA | HEMA | MMA | EA | SLS | DI | Fe²⁺ | | | SFS | DI | t-B | DI |
| grams | | | 120 | 84 | 6 | 15 | 75 | 12 | 4.5 | 450 | 0.1 | | | 1.2 | 25 | 1.71 | 25 |

Following the same process as Example 1, although Item (i) was switched to a different anionic surfactant (sodium dodecylbenzene sulfonate)(SDS). Results on cured coated panels:
Gloss (60°): 90
Ra value: 0.5 µm

### Example 4 (3311-152a)

In this example, we added a new modifier of dodecane thiol to modify the mini-emulsion with 0.7% dodecane thiol. See Table 3.

**Table 3**

| | **a** | **b** | **c** | **d** | **e** | **f** | **g** | **h** | **i** | **j** | **k** | **l** | **m** | **n** | **o** | **P** | **q** |
|---|---|---|---|---|---|---|---|---|---|---|---|---|---|---|---|---|---|
| | ER | BI | Sty | BA | MAA | HEMA | MMA | EA | | DI | Fe²⁺ | SFS | DI | SFS | DI | t-B | DI |
| grams | 171.4 | 21.8 | 58.8 | 53.1 | 2.9 | 6.9 | 56.7 | 14.6 | | 400 | 0.1 | 0.05 | | 0.75 | 20.0 | 1.2 | 20.0 |

In addition, Item (i) was replaced with 16.3 g sodium lauryl sulfate sodium-Anionic Surfactant (sodium lauryl sulfate)(SLS). 2.6 g Dodecane thiol (Aldrich) was added right before items (i) and (j) were added and mixed for more than 10 minutes. Results on cured coated panels:
Gloss (60°): 68
Ra value: 0.5 µm

### Example 5 (3311-133a)

In this example, we added a new modifier of ethanol thiol to modify the mini-emulsion with 0.25% ethanol thiol. See Table 4.

**Table 4**

| | **a** | **b** | **c** | **d** | **e** | **f** | **g** | **h** | **i** | **j** | **k** | **l** | **m** | **n** | **o** | **p** | **q** |
|---|---|---|---|---|---|---|---|---|---|---|---|---|---|---|---|---|---|
| | ER | BI | Sty | BA | MAA | HEMA | MMA | EA | | DI | Fe²⁺ | SFS | DI | SFS | DI | t-B | DI |
| Grams | 121.8 | 22.7 | 58.8 | 35.4 | 1.9 | 4.5 | 37.8 | 10.1 | | 400 | 0.1 | 0.05 | | 0.75 | 20.0 | 1.2 | 20.0 |

Again, Item (i) was replaced with 12.8 g anionic Surfactant (sodium lauryl sulfate)(SLS), and 0.63 g ethane thiol was added right before items (i) and (j) were added and mixed for more than 10 minutes. Results on cured coated panels:
Gloss (60°): 49
Ra value: 0.8 µm

### Example 6 (3372-122b)

In this example, we added an initiator and a reducer to modify the mini-emulsion with higher tertiary-Butyl hydrogen peroxide initiator and ascorbic acid reducer (Vc). See Table 5.

**Table 5**

| | **A** | **B** | **c** | **d** | **e** | **f** | **g** | **h** | **i** | **j** | **k** | **l** | **m** | **n** | **o** | **p** | **q** |
|---|---|---|---|---|---|---|---|---|---|---|---|---|---|---|---|---|---|
| | ER | BI | Sty | BA | MAA | HEMA | MMA | EA | ALS | DI | Fe²⁺ | | DI | Vc | DI | t-B | DI |
| Grams | 171.4 | 21.8 | 56.5 | 51.0 | 2.8 | 6.4 | 54.5 | 14.6 | 15.7 | 580 | 0.24 | | | 3.6 | 30.0 | 5.1 | 30 |

Items (n) and (p) were replaced by 3.6 gram ascorbic acid and 5.1 g t-Butyl hydrogen peroxide. Results on cured coated panels:
Gloss (60°): 75
Ra value: 0.47 µm

### Example 7 (Control 39090. No Chain Transfer Agent (CTA).

**Table 6**

| | **a** | **b** | **c** | **d** | **e** | **f** | **g** | **h** | **i** | **j** | **k** | **l** | **m** | **n** | **o** | **p** | **q** |
|---|---|---|---|---|---|---|---|---|---|---|---|---|---|---|---|---|---|
| | ER | BI | Sty | BA | MAA | HEMA | MMA | EA | | DI | Fe²⁺ | SFS | DI | SFS | DI | t-B | DI |
| Grams | 171.4 | 21.8 | 56.5 | 51.0 | 2.8 | 6.4 | 54.5 | 14.6 | | 578.1 | 0.2 | 0.1 | 1 | 1.2 | 10.2 | 1.8 | 10.2 |

Results on cured coated panels:
Gloss (60°): 10-20
Ra value: 1.0-1.4 µm

### Example 8

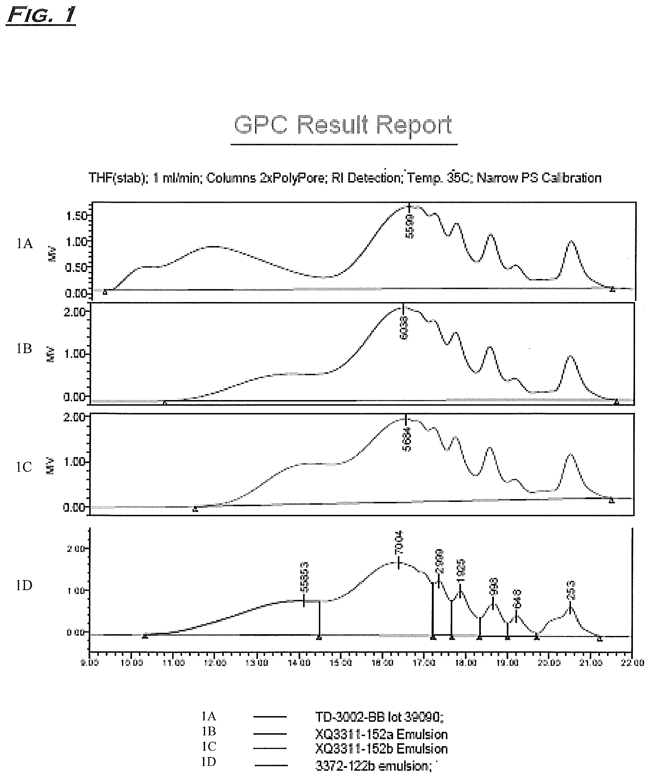

Figure-1 shows Gel Permeation Chromatography (GPC) analysis comparing the molecular weight distributions of Example 7, a comparative example, to Examples 2, 4 and 6. Note that the molecular weight distribution of the control composition of Example 7 in the top chart, Fig. 1A, shows an undesirably large distribution, while the three (3) Examples 4, 2 and 6, respectively in downward order, Figs. 1B, 1C, and 1D, show a much tighter distribution of molecular weights (MW's).

GPC results shows that the modification in Examples 2, 4 and 6 provided significant reduction in molecular weight and polydispersity, or distribution of the molecular weights relative to the control of Example 7. See Table 7, comparing the low molecular weight to the molecular weight distribution:

**Table 7**

| | Molecular Wt. / u (Daltons) | Polydispersity / u (Daltons) |
|---|---|---|
| Control | 100,000 | 47 |
| Thiol addition | 16,000 | 8 |

### Example 9

3372-137b formulation, identified as 3379-64 composition due to different polymerization process, with (0.2% mercaptan (thiol glycerine)(TG) was added into a regular seed emulsion (i.e. non-mini-emulsion) polymerization.

### Regular Seed (i.e. non-mini-emulsion) preparation:

One gram anionic surfactant (sodium dodecylbenzene sulfonate) (SDS) and 300 grams deionized water was added to a clean, two (2) liter, 4-necked flask, equipped with an agitator and a nitrogen inlet. A mixture of 4.0 gram Butyl acrylate, 3.0 g methyl methacrylate, and 5.0 g styrene was loaded into the abovementioned flask and agitated for 10-20 minutes. Then, we dissolved 0.3g sodium persulfate in 10.0 g deionized water and added that mixture into the above flask. The flask was heated to 75 C for 30 to 60 minutes under a nitrogen blanket.

### Pre-emulsion Preparation:

Weigh 80.0 g BA, 72.0 g MMA, 115.0 g sty, 6.0 g MAA, 15.0 g HEMA, 0.67 TG 90, 3.5 g anionic surfactant (sodium dodecylbenzene sulfonate)(SDS), 185.0 g DI water, and 1.14g t-BHPO in a clean container (One gallon HDPE plastic). Mix well and shake vigorously until a relatively stable pre-emulsion is formed.
Reducer feed: Dissolve 0.8 g SFS into 25.0 g DI water and put into a syringe automatic feeding pump.
Chaser: Dissolve 0.2 g SFS in 5.0 g water, 0.28g t-BHPO in 5.0 g DI water in separate beakers.

### Polymerization:

Feed pre-emulsion and reducer over a 3-hour feed period with a separate feeding pump into a flask under 60°C. Hold for 30 minutes once feeds are finished. Add chaser over a 10 minute period. Hold an additional 2 hours @ 60°C. Emulsion % NV was 35.8. Results on cured coated panels:
Gloss (60°): 62
Ra value: 1.04 µm

Example 3 and Example 9 were prepared using the same monomer composition. Both contained thiol glycerine at the same loading. On the other hand, the emulsions were prepared using different processes, i.e. mini-emulsion versus regular seeded (i.e. non-mini-emulsion) polymerization.

**Table 8**

| Emulsion | Process | Peak MW (u "Daltons") | % Area | Gloss at 60° (GU) | Ra value (µm) |
|---|---|---|---|---|---|
| Ex. 3 | Mini-emulsion polymerization | 108345 | 97.55 | 90 | 0.5 |
| 3372-137a | | | | | |
| Ex. 9 | Regular seed (i.e. non-mini-emulsion) polymerization | 100328 | 97.77 | 62 | 1.04 |
| 3379-64 | | | | | |

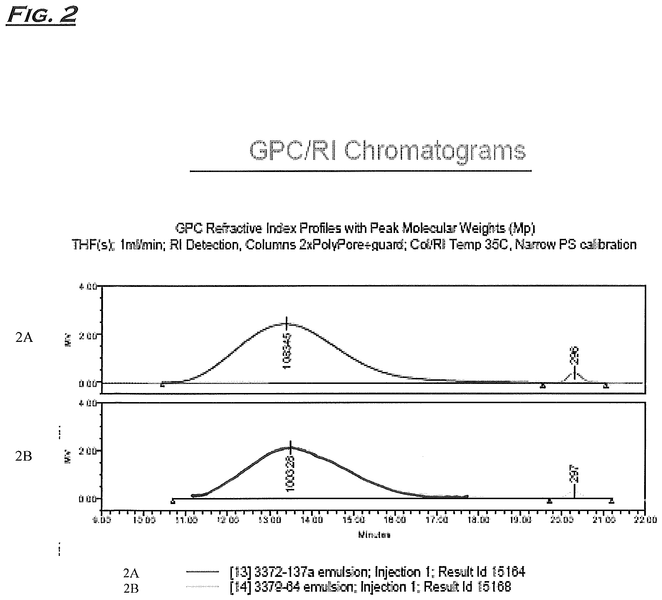

Fig. 2: Gel Permeation Chromatograph (GPC) analysis comparing the molecular weight distribution ranges of the resulting coatings from Example 3 to Example 9 shows that Example 3 coating gives a much higher gloss reading and smaller Ra value, meaning a smoother surface. The results of our experiments show that the glossiness and smoothness of the resultant coating of the present invention is greatly enhanced over the control composition. The gloss values were consistently over 90 GU, and the chart above shows that these values would be considered as "high gloss". This value of high gloss represents a new composition that is suitable and desirable for making glossy autodeposition coatings, without compromising the other desirable properties, including moisture barrier protection. This is very advantageous for some applications.

## Claims

1. An autodepositing composition, comprising:
at least one epoxy dispersion comprising: (i) an epoxy resin; (ii) at least one ethylenically unsaturated monomer polymerized in the presence of at least one chain transfer agent through mini-emulsion polymerization; (iii) optionally at least one latent curing agent, and (iv) optionally a coalescing agent;
water; and
wherein at least 75% by weight of said epoxy dispersion has a weight average molecular weight in a range of between 25,000 to 1,000 u [Daltons], measured by gel permeation chromatography (GPC).

2. The composition of claim 1, wherein said epoxy resin is derived from one or more epoxy resins conforming to the general chemical structure: 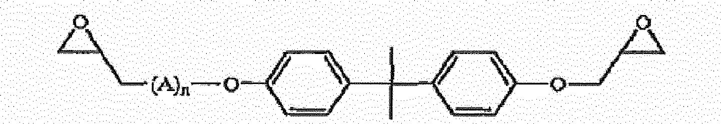 where: 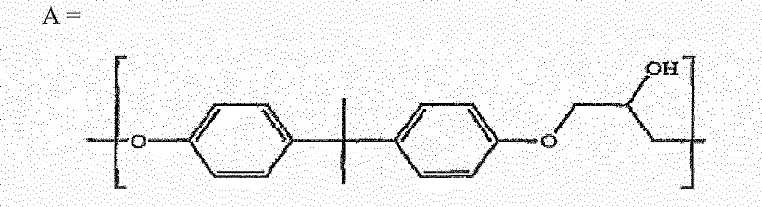 and n is 0 or an integer between 1 and 50.

3. The composition of claim 1, wherein said ethylenically unsaturated monomer is selected from the group consisting of vinyl aromatic hydrocarbons, styrene, substituted styrenes, vinyl aliphatic hydrocarbons, ethylenically unsaturated acids, acrylic and methacrylic acid, alkyl and hydroxyl-alkyl esters of ethylenically unsaturated acids, butyl acrylate, methyl methacrylate, and hydroxyethyl methacrylate, acrylonitrile, methacrylonitrile, acrylamide, methacrylamide, and combinations thereof.

4. The composition of claim 1, wherein said chain transfer agent is selected from thiol-containing compounds.

5. The composition of claim 4, wherein the concentration of the thiol-containing compounds is at least 0.01 % and not more than 10.00%.

6. The composition of claim 4 or 5, wherein the thiol-containing compound is selected from thiol glycerine, dodecane thiol, ethanol thiol, trichloromethane, and combinations thereof.

7. A method of coating a metallic substrate comprising:
coating a metallic substrate accomplished in a bath by first cleaning the substrate, and rinsing with water followed by a deionized water rinsing step;
treating with the autodeposition bath composition of claim 6 and water rinsing;
optionally treating with a reaction rinse; and
oven curing at an elevated temperature of 50 to 200°C for a time period from 10 to 40 minutes oven time to form a coated metal substrate.

8. An article of manufacture comprising the coated metal substrate coated according to claim 7.

## Patentansprüche

1. Selbstabscheidende Zusammensetzung, umfassend:
mindestens eine Epoxiddispersion, umfassend: (i) ein Epoxidharz; (ii) mindestens ein ethylenisch ungesättigtes Monomer, das in der Gegenwart mindestens eines Kettenüberträgers durch Mini-Emulsions-Polymerisation polymerisiert; (iii) optional mindestens einen latenten Härter und (iv) optional ein Koaleszenzmittel;
Wasser; und
wobei mindestens 75 Gew.-% der Epoxiddispersion ein gewichtsmittleres Molekulargewicht in einem Bereich zwischen 25.000 und 1.000 u [Dalton], gemessen durch Gelpermeationschromatographie (GPC), aufweist.

2. Zusammensetzung nach Anspruch 1, wobei das Epoxidharz von einem oder mehreren Epoxidharzen, die der folgenden allgemeinen chemischen Struktur entsprechen, abgeleitet ist: 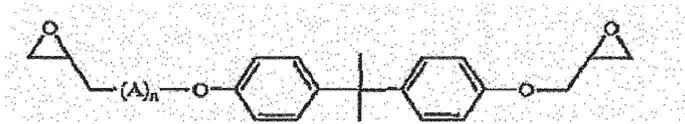 wobei: 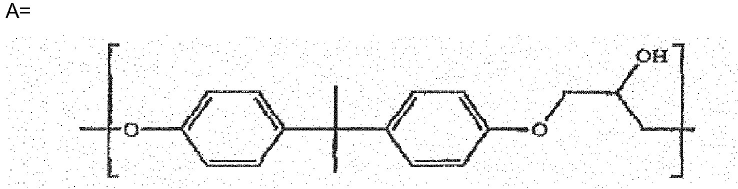 und n 0 oder eine ganze Zahl zwischen 1 und 50 ist.

3. Zusammensetzung nach Anspruch 1, wobei das ethylenisch ungesättigte Monomer ausgewählt ist aus der Gruppe bestehend aus vinylaromatischen Kohlenwasserstoffen, Styrol, substituierten Styrolen, vinylaliphatischen Kohlenwasserstoffen, ethylenisch ungesättigten Säuren, Acryl- und Methacrylsäure, Alkyl- und Hydroxylalkylester von ethylenisch ungesättigten Säuren, Butylacrylat, Methylmethacrylat und Hydroxyethylmethacrylat, Acrylnitril, Methacrylnitril, Acrylamid, Methacrylamid und Kombinationen daraus.

4. Zusammensetzung nach Anspruch 1, wobei der Kettenüberträger ausgewählt ist aus thiolhaltigen Verbindungen.

5. Zusammensetzung nach Anspruch 4, wobei die Konzentration der thiolhaltigen Verbindungen mindestens 0,01 % und nicht mehr als 10,00 % beträgt.

6. Zusammensetzung nach Anspruch 4 oder 5, wobei die thiolhaltige Verbindung ausgewählt ist aus Thiolglycerin, Dodecanthiol, Ethanolthiol, Trichlormethan und Kombinationen daraus.

7. Verfahren zum Beschichten eines metallischen Substrats, umfassend:
Beschichten eines metallischen Substrats, das in einem Bad durch erstes Reinigen des Substrats erfolgt, und
Spülen mit Wasser, gefolgt von einem Spülschritt mit entionisiertem Wasser;
Behandeln mit der Selbstabscheidungsbadzusammensetzung nach Anspruch 6 und Spülen mit Wasser;
optionales Behandeln mit einer Reaktionsspülung; und
Ofenhärten bei einer erhöhten Temperatur von 50 bis 200 °C für einen Zeitraum von 10 bis 40 Minuten Ofenzeit, um ein beschichtetes Metallsubstrat auszubilden.

8. Herstellungserzeugnis, umfassend das beschichtete Metallsubstrat, beschichtet nach Anspruch 7.

## Revendications

1. Composition d'autodépôt, comprenant :
au moins une dispersion d'époxy comprenant : (i) une résine époxy ; (ii) au moins un monomère éthyléniquement insaturé polymérisé en présence d'au moins un agent de transfert de chaîne par polymérisation en mini-émulsion ; (iii) facultativement au moins un agent de durcissement latent, et (iv) facultativement un agent coalescent ;
de l'eau ; et
dans laquelle au moins 75 % en poids de ladite dispersion d'époxy a un poids moléculaire moyen en poids dans une plage entre 25 000 à 1 000 µ [Daltons], mesurée par chromatographie par perméation de gel (GPC).

2. Composition selon la revendication 1, dans laquelle ladite résine époxy est dérivée d'une ou de plusieurs résines époxy conformes à la structure chimique générale : 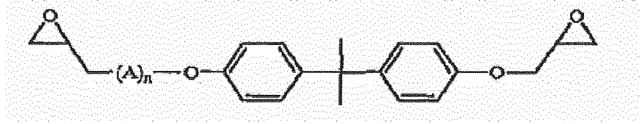 où : 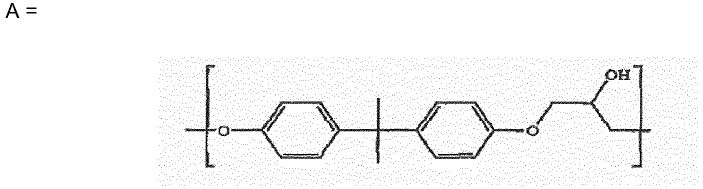 et n est 0 ou un entier entre 1 et 50.

3. Composition selon la revendication 1, dans laquelle ledit monomère éthyléniquement insaturé est choisi dans le groupe constitué d'hydrocarbures aromatiques vinyliques, de styrène, de styrènes substitués, d'hydrocarbures aliphatiques vinyliques, d'acides éthyléniquement insaturés, d'acide acrylique et méthacrylique, d'esters d'alkyle et d'hydroxyle-alkyle d'acides éthyléniquement insaturés, d'acrylate de butyle, de méthacrylate de méthyle, et de méthacrylate d'hydroxyéthyle, d'acrylonitrile, de méthacrylonitrile, d'acrylamide, de méthacrylamide, et de combinaisons de ceux-ci.

4. Composition selon la revendication 1, dans laquelle ledit agent de transfert de chaîne est choisi à partir de composés contenant un thiol.

5. Composition selon la revendication 4, dans laquelle la concentration des composés contenant un thiol est d'au moins 0,01 % et inférieure à 10,00 %.

6. Composition selon la revendication 4 ou 5, dans laquelle le composé contenant un thiol est choisi parmi la glycérine thiol, le dodécane thiol, l'éthanol thiol, le trichlorométhane, et des combinaisons de ceux-ci.

7. Procédé de revêtement d'un substrat métallique comprenant :
le revêtement d'un substrat métallique mis en oeuvre dans un bain en nettoyant d'abord le substrat, et en le rinçant avec de l'eau suivi par une étape de rinçage à l'eau désionisée ;
le traitement avec la composition de bain d'autodéposition selon la revendication 6 et le rinçage à l'eau ;
le traitement facultatif avec un rinçage de réaction ; et
le durcissement au four à une température élevée de 50 à 200 °C pour une période de temps de 10 à 40 minutes au four pour former un substrat métallique revêtu.

8. Article de fabrication comprenant le substrat métallique revêtu selon la revendication 7.
